# EUROPEAN PATENT SPECIFICATION

(11) **EP 4 512 582 B1**
(45) Date of publication and mention of the grant of the patent: **15.04.2026**
(21) Application number: 23193325.0
(22) Date of filing: 24.08.2023
(51) Int. Cl.: B25J 19/00, B25J 19/06, B65B 9/13

(54) **SAFETY SYSTEM FOR A MANIPULATING GROUP FOR MANIPULATING PACKAGING MATERIALS**
SICHERHEITSSYSTEM FÜR EINE HANDHABUNGSGRUPPE ZUM MANIPULIEREN VON VERPACKUNGSMATERIALIEN
SYSTÈME DE SÉCURITÉ POUR GROUPE DE MANIPULATION POUR MANIPULER DES MATÉRIAUX D'EMBALLAGE

(43) Date of publication of application: 26.02.2025
(73) Proprietor: Sidel Participations, 76930 Octeville-sur-Mer (FR)
(72) Inventor: VARESI, Simone, 43126 Parma (IT)
(74) Representative: Sidel Group

(56) References cited:
- CN-A- 111 136 418
- CN-A- 114 683 250
- CN-U- 219 341 631
- US-A1- 2008 014 071

## Description

### TECHNICAL FIELD

The present invention relates to a safety system for a suspended load corresponding to a manipulating group which is configured for manipulating packaging material in a machine to be used in the packaging of a pourable products by means of containers.

### BACKGROUND ART

In the field of packaging pourable products by means of containers, it is known to use dry end machines for creating a plurality of secondary or tertiary packaging, and/or for palletizing or depalletizing the filled, capped and decorated containers.

To this end, it is known to use heads which can serve different purposes. For example, a head can be used for manipulating primary or secondary packaging, or for manipulating components or objects for the secondary or tertiary packaging.

The head is usually vertically movable along an upright to be able to perform the operations at different vertical heights, or to adapt to the format or type of primary packaging, secondary packaging or tertiary packaging. The vertical movement is obtained by means of a motor and a brake.

There may be the need for an operator to have access to the working area of the head, for example for maintenance, repairing or changeover purposes. In this case, the suspended load corresponding to the head shall be safeguarded. The working area shall be placed in safety condition, to secure the safety of the operator.

To this end it is known to use a stopping device configured for being vertically integral with the manipulating group to which the head belongs.

The safety system comprises also a safety body which is configured for being vertically extended while being fixed to a vertical upright. The safety body is provided with a respective plurality of holes which are distributed along the extension of said body.

The stopping device comprises at least one stopping pin which can adopt a not engaged condition in which the pin does not engage with any of said holes, and an engaged condition in which the pin engages in a vertically slidable manner with at least one hole of the body, to at least limit a vertical downwards accidental movement of the group with respect to the upright.

The pin can be engaged in a slidable manner to ensure that, in case the pin is prevented from engaging with the hole due to the specific vertical height adopted by the manipulating group when the safety system is operative, because the pin abuts against the material between two consecutive holes, in case of accidental failure of the brake, the pin will anyway engage with the next hole according to the upwards direction. On the other hand, due to the pin being slidable in the hole, in case of said failure, the falling will not be immediately stopped, due to the vertical play between the pin and the border of the hole. Documents US2008/014071A1, CN219341631U, CN114683250A, CN11136418A disclose handling devices with fall prevention systems.

### DISCLOSURE OF INVENTION

A safety system according to any of the appended system claim or according to present description is configured for furtherly improving the safety of a suspended load corresponding to a manipulating group for manipulating materials for the packaging of pourable products.

A machine for the packaging of pourable products according to any of the appended machine claims or according to present description, comprises a system according to any of the appended system claims or according to present description.

The following brief description of the drawings and detailed description of the invention will be referred to a possible first embodiment of the safety system according to present description, to a possible second embodiment of the safety system according to present description, and to a possible third embodiment of the safety system according to present description. The following brief description of the drawings and detailed description of the invention will be referred to a possible example embodiment of a machine according to present description, which can comprise said first embodiment or said second embodiment or said third embodiment of the safety system.

### BRIEF DESCRIPTION OF THE DRAWINGS

The following detailed description will be referred to the accompanying drawings, in which:
Figure 1 is a perspective view of a part of a machine comprising the first embodiment;
Figure 2 is a close up view of the safety system of Figure 1;
Figure 3 is a perspective view showing the safety system of Figure 1 in a first instant during a method of use of the safety system;
Figure 4 is perspective view showing the safety system of Figure 1 in a second instant during said method of use;
Figure 5 is a perspective view showing the safety system of Figure 1 in a third instant during said method of use;
Figure 6 is a perspective view showing a second embodiment of the safety system, during a preliminary instant which is to be considered before the first instant;
Figure 7 shows the second embodiment in the third instant;
Figure 8 is a perspective view showing a third embodiment of the safety system, during a preliminary instant which is to be considered before the first instant;
Figure 9 shows the third embodiment in the third instant.

### DETAILED DESCRIPTION OF THE INVENTION

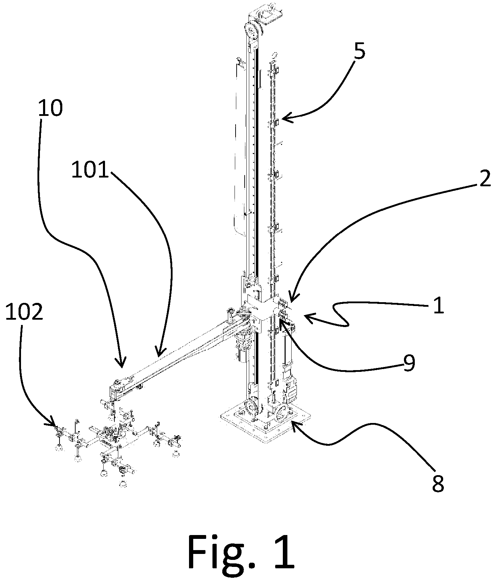

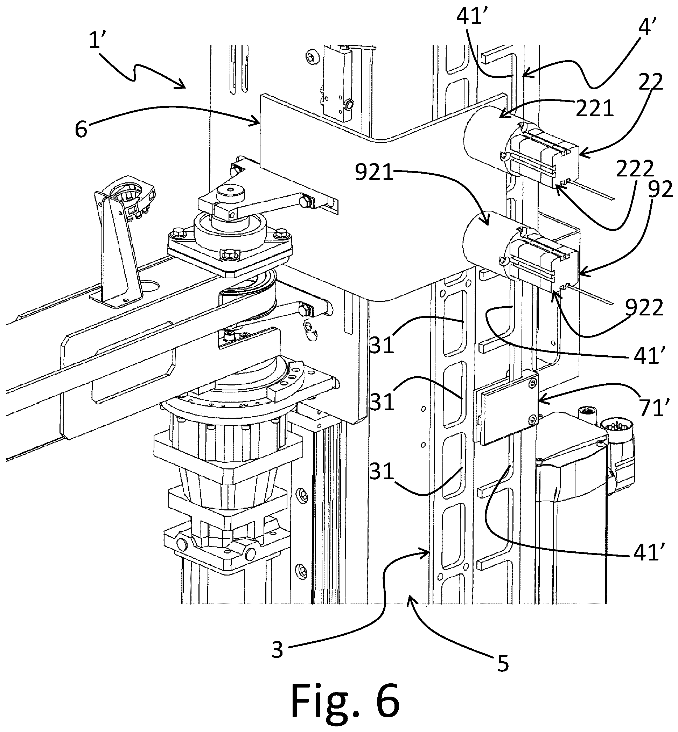

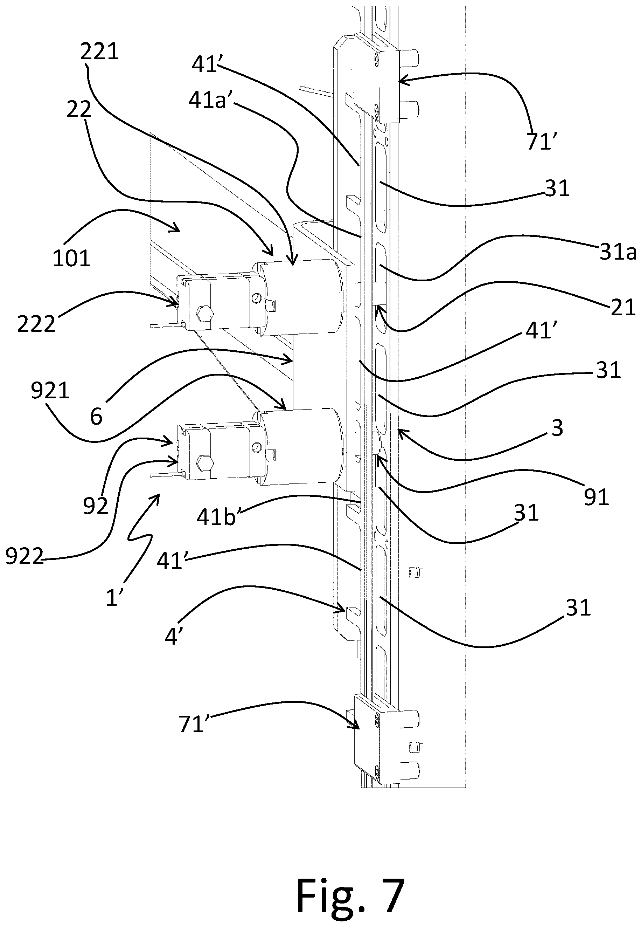

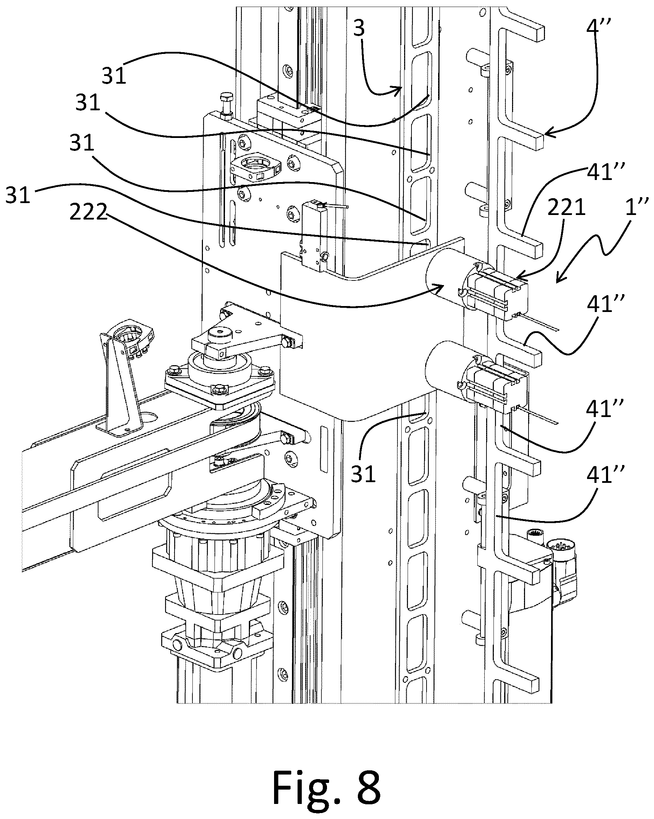

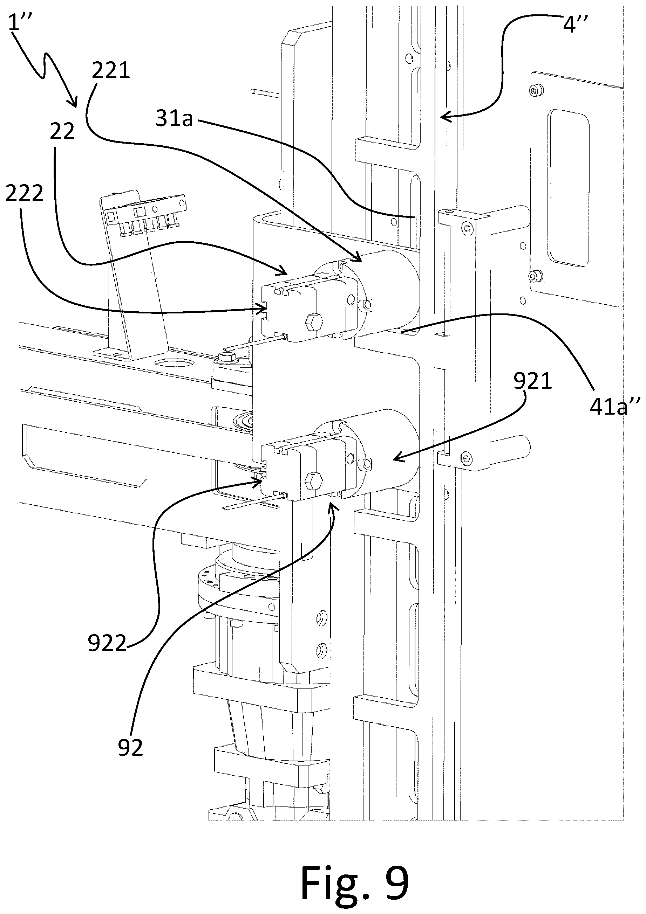

The first embodiment of the safety system is indicated with 1 in Figures 1-5. The second embodiment of the safety system is indicated with 1' in Figures 6 and 7. The third embodiment of the safety system is indicated with 1" in Figures 8 and 9.

The safety system 1 or 1' or 1" is for placing in safety conditions the working area which is under a vertically movable suspended load corresponding to a manipulation group 10 for manipulating packaging materials. The machine is configured for the packaging of pourable products and comprises the group 10. The machine comprises a vertical upright 5 to which the group 10 is mounted. The group is vertically movable with respect to the upright 5, so that the group 10 defines the suspended load. The machine comprises the safety system 1 or 1' or 1".

The group 10 comprises an arm 101 and an operating head 102 supported by the arm 101. The machine can be a palletizing machine, or a depalletizing machine, or a crating machine, or a decrating machine.

The system 1 or 1' or 1'' comprises a stopping device 2 configured for being vertically integral with the group 10.

The system 1 or 1' or 1'' comprises a first safety body 3 which is configured for being vertically extended while being fixed to the vertical upright 5. The first safety body 3 is provided with a respective plurality of holes 31 which are distributed along the extension of said body 3.

The system 1 or 1' comprises a second safety body 4 or 4' or 4'' which is configured for adopting an operative position in which the second body 4 or 4' or 4'' is vertically extended with the first body 3 being interposed between said second body 4 or 4' or 4'' and said upright 5. The second body 4 or 4' or 4'' is provided with a respective plurality of recesses 41 or 41' or 41'' which are distributed along the extension of said second body 4 or 4' or 4".

The second body of the first embodiment is indicated with 4. The second body of the second embodiment is indicated with 4'. The second body of the third embodiment is indicated with 4". The recesses of the first embodiment are indicated with 41. The recesses of the second embodiment are indicated with 41'. The recesses of the third embodiment are indicated with 41".

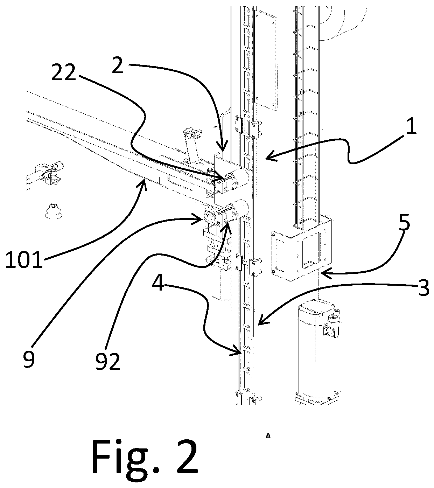

The second body 4 of the first embodiment adopts the operative position in Figures 2, 3, 4, 5. The second body 4' of the second embodiment adopts the operative position in Figure 7. The second body 4" of the third embodiment adopts the operative position in Figure 9.

The stopping device 2 can adopt a not engaged condition in which the stopping device 2 does not engage any of said holes and recesses. The stopping device 2 can adopt an engaged condition in which the stopping device 2, with the second body 4 or 4' or 4" adopting the operative position, engages in a vertically slidable manner at least one hole 31a of the first body 3 and one recess 41a or 41a' or 41a" of the second body 4 or 4' or 4". In this way, the stopping device 2 at least limits a downwards vertical accidental movement of the group 10 with respect to the upright 5. The second body 4 or 4' or 4" is vertically movable with respect to the first body 3 and the upright 5, in said operative position of the second body 4 or 4' or 4'', so that the engaged recess 41a or 41a' or 41a" abuts vertically against the stopping device 2 to prevent a downwards vertical motion of the stopping device 2 with respect to the first body 3.

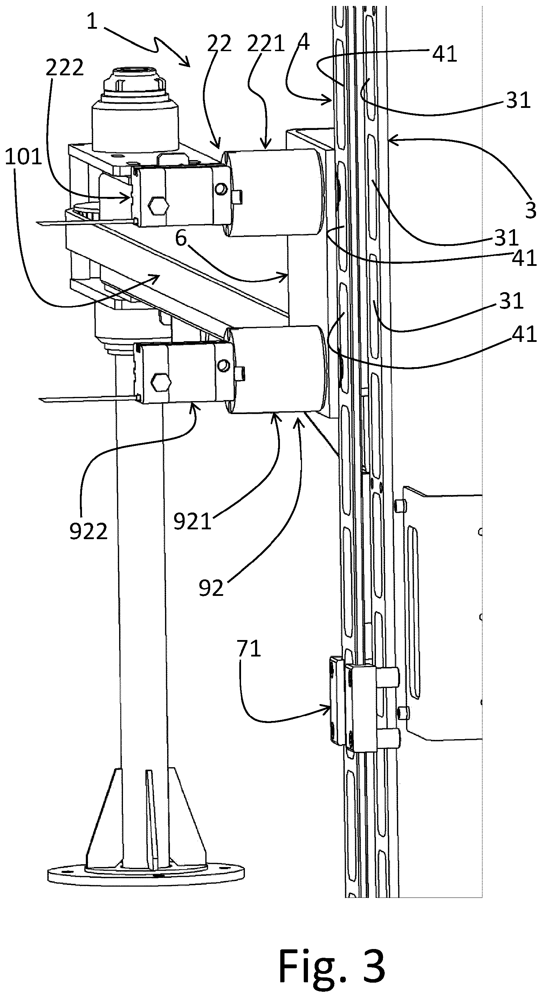

In Figures 3, 4 and 5, the second body 4 adopts the operative position. In Figure 7, the second body 4' adopts the operative position. In Figure 9, the second body 4" adopts the operative position.

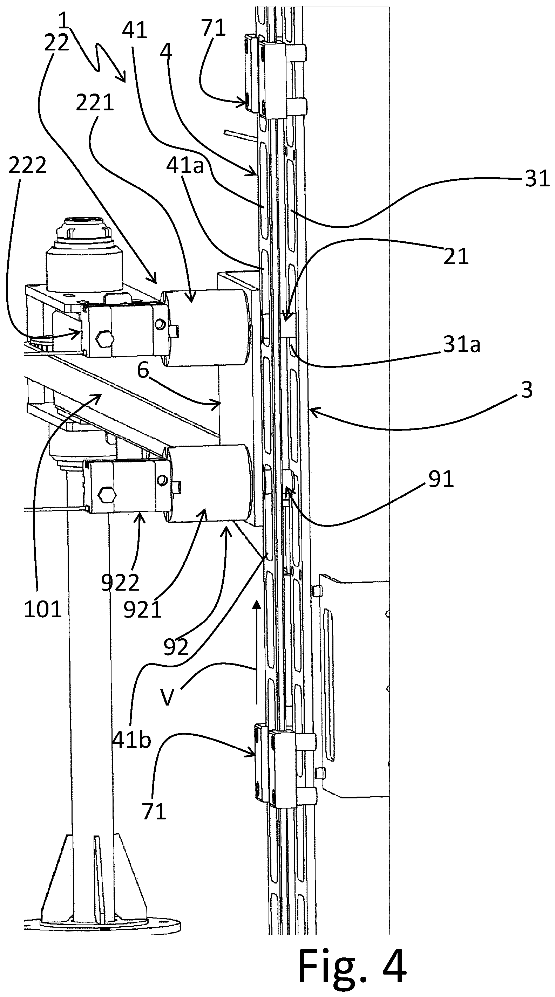

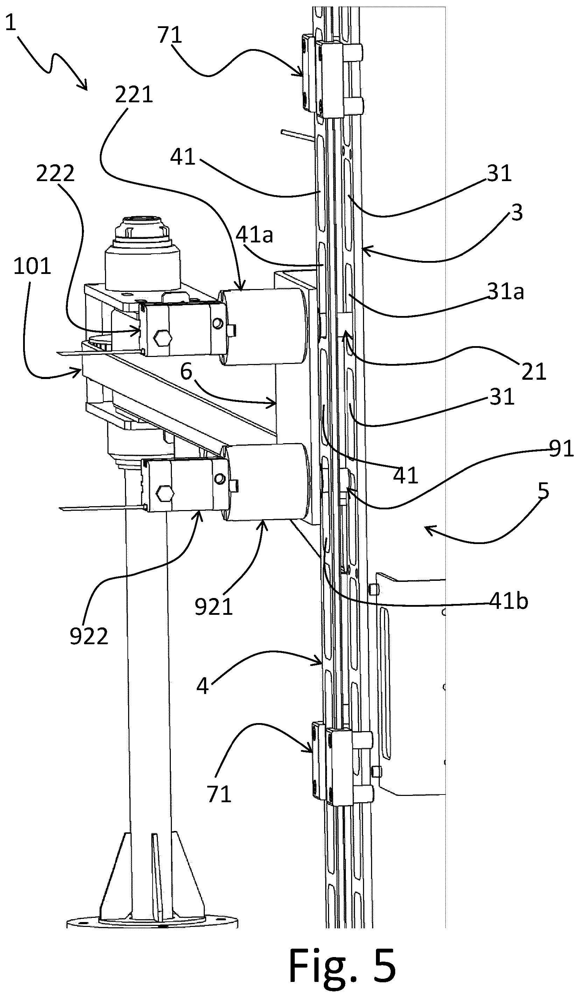

In Figure 3, the stopping device 2 adopts the not engaged condition. In Figures 4 and 5, the stopping device 2 adopts the engaged condition in which it engages said one recess 41a of the second body 4 and one hole 31a of the first body 3. In Figure 5 the engaged recess 41a abuts vertically against the stopping device 2. In Figure 6, the stopping device 2 adopts the not engaged condition. In Figure 7, the stopping device 2 adopts the engaged condition in which it engages said one recess 41a' of the second body 4' and one hole 31a of the first body 3. In Figure 7, the engaged recess 41a' abuts vertically against the stopping device 2. In Figure 8, the stopping device 2 adopts the not engaged condition. In Figure 9, the stopping device 2 adopts an engaged condition in which it engages said one recess 41a'' of the second body 4" and one hole 31a of the first body 3. In Figure 9, the engaged recess 41a" abuts vertically against the stopping device 2.

Between situation of Figure 4 and situation of Figure 5, a vertical movement of the second body 4 with respect to the first body 3 and the upright 5 occurs. The direction of vertical movement is indicated with arrow V in Figure 4.

The first body 3 is fixed to the upright 5.

The stopping device 2 comprises an actuator 22 and a stopping pin 21. The actuator 22 comprises a spring 221 and a jack 222.

In the engaged condition of the stopping device 2, the pin 21 engages in a vertically slidable manner in said one hole 31a of the first body 3. In Figures 4, 5, 7 and 9, the pin 21 engages in a vertically slidable manner said one hole 31a of the first body 3. In Figure 9 the pin is not visible.

The jack 222 and the spring 221 are indicated in Figures from 3 to 9.

The jack 222 prevents the pin 21 from engaging said one hole 31a against the action of the spring 221 so that, by deactivating the jack 222, the spring 221 can push the pin 21 into engagement wit said one hole 31a.

The operative condition of the safety system 1 or 1' or 1" corresponds to the deactivated condition of the jack 222 and to the operative position of the second body 4 or 4' or 4".

In Figures 3, 6 and 8, the jack 222 does not adopt a deactivated condition, and therefore the spring 221 is not free to push the pin 21 into engagement with said one hole 31a. In Figures 4, 5, 7 and 9, the jack 222 adopts a deactivated condition so that the spring 221 is free to push the pin 21 into engagement with said one hole 31a.

The operative condition of the safety system 1 or 1' corresponds to the deactivated condition of the jack 222 and to the operative position of the second body 4 or 4'.

Each hole 31 of the first body 3 is elongated along the extension of the first body 3.

In the deactivated condition of the jack 222, it can occur that the pin 21 is prevented to engage any hole of the first body 3 because it abuts against the material between two consecutive holes, due to the relative vertical position of the pin 21 with respect to the first body 3, and therefore due to the specific vertical height of the manipulating group 10.

The elongation of each hole 31 ensures that, even if in the deactivated condition of the actuator 23 the pin 21 is prevented from engaging with said one hole 31a because of the relative vertical position of the pin 21 with respect to the first body 3, and therefore because of the specific vertical height of the manipulating group 10, in case of accidental failure of the brake, the pin 21 will anyway engage with the next hole of the first body 3 according to the downwards direction.

This effect is allowed by each hole 31 being elongated and by the pin 21 being able to be engaged in a vertically slidable manner in each hole of the first body 3.

Thanks to the abutment between the stopping device 2 and said one recess 41a or 41a' or 41a" of the second body 4, in case of accidental failure of the brake, there will be no vertical motion between the stopping device 2 and the first body 3, and therefore no vertical motion between the stopping device 2 and the upright 5, so that also any vertical motion between the manipulating group 10 and the upright 5 will be prevented.

The first body 3 comprises a respective plate in the form of a strip with the plurality of respective holes 31 passing through the whole thickness of the plate.

Each recess 41a or 41a' of the second body 4 or 4' is elongated along the extension of the second body 4.

In the first embodiment, each recess 41a is defined by a respective hole.

In the first embodiment 1, the second body 4 comprises a respective plate in the form of a strip with the plurality of respective holes 41 passing through the whole thickness of the plate.

In the second embodiment and third embodiment, the body 4' or 4" is comb shaped.

In the first embodiment 1, each hole defining a recess 41a is elongated along the extension of the second body 4.

In the third embodiment 1'', in the engaged condition of stopping device 2, the spring 221 engages in a vertically slidable manner said one recess 41a" and the second body 4" is vertically movable with respect to the first body 3 and the upright 5, in said operative position of the second body 4", so that the engaged recess 41a" abuts vertically against the spring 221 to prevent a downwards vertical motion of the stopping device 2 with respect to the first body 3. In this way the spring 221 can be used both for pushing automatically the pin 21 into engagement with said one hole 31a of the first body 3 and for engaging and abutting against said one recess 41a'' of the second body 4".

In Figure 9, the engaged recess 41a" vertically abuts against the spring 221.

In the third embodiment 1", the second body 4'' is rotatable between said operative position in which the spring 221 is faced towards the second body 4", and a not operative position. In the not operative position of the second body 4'', the spring 221 is not faced towards the second body 4'' so that the spring 221 cannot engage any of the recesses.

In Figure 8, the second body 4" adopts the not operative position. In Figure 9, the second body 4" adopts the operative position.

Between situation of Figure 8 and situation of Figure 9, a rotation of second body 4" occurs to switch the second body 4'' between the not operative position and the operative position.

In the third embodiment 1", the lateral footprint of the safety system is reduced.

In the first embodiment 1 and in the second embodiment 1', the stopping pin 21 can adopt a not engaged position in which the pin 21 does not engage any of said holes and recesses, and an engaged position in which the pin 21, with the second body 4 or 4' adopting the operative position, engages in a vertically slidable manner at least said one hole 31a of the first body 3 and one recess 41a or 41a' of the second body 4 or 4'. Inn this way, the stopping device 2 can at least limit a downwards vertical accidental movement of the group 10 with respect to the upright 5. The second body 4 or 4' is vertically movable with respect to the first body 3 and the upright 5, in said operative position of the second body 4 or 4', so that the engaged recess 41a or 41a' abuts vertically against the pin 21 to prevent a downwards vertical motion of the stopping device 2 with respect to the first body 3.

The engaged condition of the stopping device 2 corresponds to the engaged position of the pin 21 and the not engaged condition of the stopping device 2 corresponds to the not engaged position of the pin 21.

In Figure 3, the pin 21 adopts the not engaged position. In Figures 4 and 5, the pin 21 adopts the engaged condition in which it engages said one recess 41a of the second body 4 and one hole 31a of the first body 3. In Figure 5 the engaged recess 41a abuts vertically against the pin 21. In Figure 6, the pin 21 adopts the not engaged position. In Figure 7, the pin 21 adopts the engaged position in which it engages said one recess 41a' of the second body 4' and one hole 31a of the first body 3. In Figure 7, the engaged recess 41a' abuts vertically against the pin 21. In Figure 8, the pin 21 adopts the not engaged position. In Figure 9, the pin 21 adopts the engaged position in which it engages said one recess 41a" of the second body 4' and one hole 31a of the first body 3. In Figure 9, the engaged recess 41a" abuts vertically against the pin 21. In Figure 9 the pin 21 is not visible.

The jack 222 keeps the pin 21 in the not engaged position against the action of the spring 221 so that, by deactivating the jack 222, the spring 221 can push the pin 21 into said engaged position.

In Figures 3, 6 and 8, the jack 222 is not deactivated, and therefore the spring 221 is not free to push the pin 21 into said engaged position. In Figures 4, 5, 7 and 9, the jack 222 is deactivated so that the spring 221 is free to push the pin 21 into said engaged position.

In the deactivated condition of the jack 222, it can occur that the pin 21 is prevented to engage in any recess of the second body 4 because it abuts against the material between two consecutive recesses, due to the relative vertical position of the pin 21 with respect to the second body 4, and therefore due to the specific vertical height of the manipulating group 10.

The elongation of each hole 41a or recess 41a' ensures that, even if in the deactivated condition of the jack 222 the pin 21 is prevented from adopting the engaged position because of the relative vertical position of the pin 21 with respect to the second body 4, and therefore because of the specific vertical height of the manipulating group 10, in case of accidental failure of the brake, the pin will anyway engage with the next hole or recess of the second body 4 according to the downwards direction.

This is effect is allowed by each recess 41 being elongated and by the pin 21 being able to be engaged in a vertically slidable manner in any recess 41a or 41a'.

Thanks to the abutment between the pin 21 and said one recess 41a or 41a' of the second body 4 or 4', in case of accidental failure of the brake, there will be no vertical motion between the stopping device 2 and the first body 3, and therefore no vertical motion between the stopping device 2 and the upright 5, so that also any vertical motion between the manipulating group 10 and the upright 5 will be prevented.

In the second embodiment, the second body 4' is displaceable between said operative position in which the first body 3 is interposed between the second body 4 and the upright 5, and a not operative position in which the first body 3 is not interposed between the second body 4' and the upright 5, so that the pin 21, in the operative position of the second body 4', cannot face and therefore cannot engage any of the recesses. The second body 4' is vertically movable with respect to the first body 3 and the upright 5 also in the not operative position.

In Figure 6, the second body 4' adopts the not operative position. In Figure 7, the second body 4' adopts the operative position.

The second embodiment 1' allows the vertical height of the second body 4' to be regulated after the pin 21 has already engaged the hole 31a of the first body 3, to avoid the risk of the pin 21 not being able to engage in any recess because it abuts against material between two consecutive recesses.

In this case, two regulation phases may be performed for regulating the vertical position of the second body 4'. A first one can occur when the second body 4' is adopting the not operative position, and another one when the second body 4' is adopting the operative position. The second phase allows a fine tuning for causing the vertical abutment between the pin 21 and the engaged recess 41a' of the second body 4'.

The displacement of the second body 4' is horizontal.

In all the embodiments, each of the first body 3 and second body 4 or 4' or 4" is elongated along the respective extension.

Between situation of Figure 6 and situation of Figure 7, both the displacement of the second body 4' and the vertical movement of the second body 4' occur.

The stopping device 2 is configured so that, between said not engaged condition and said engaged condition of the stopping device 2, said pin 21 moves horizontally.

The stopping device 2 is configured for operating at a first vertical height in said operative condition of the safety system 1 or 1'.

The system 1 or 1' comprises a further stopping device 9 which is configured for operating at a second vertical height in the operative condition of the safety system 1 or 1'.

The further stopping device 9 comprises at least one further stopping pin 91 which can adopt a not engaged position in which the further pin 91 does not engage any of said holes and recesses, and an engaged position in which the further pin 91, with the second body 4 or 4' adopting the operative position, engages in a vertically slidable manner at least one further hole of the first body 3 and one further recess 41b or 41b' of the second body 4 or 4'. In this way, also the further stopping device 9 at least limits a downwards vertical accidental movement of the group 10 with respect to the upright 5.

The further stopping device 9 comprises a further actuator 92. The further actuator 92 comprises a further spring 921 and a further jack 922. The further spring 921 and the further jack 922 are indicated in Figures from 3 to 9.

The further jack 922 keeps the further pin 91 in the not engaged position against the action of the further spring 921 so that, by deactivating the further jack 922, the further spring 921 can push the further pin 91 into said engaged position. The operative condition of the safety system 1 or 1' corresponds also to the deactivated condition of the further jack 922.

The use of the further stopping device 9 reduces or avoids the risk that in the operative condition of the system 1 or 1' there is no engagement between any pin and any hole or recess.

In the situation shown in Figures 5 and 7, the further pin 91 engages the further recess 41b or 41b' of the second body 4 or 4', but is not engaging any hole of the first body 3.

In the situation of Figure 9, the further spring 921 engages the further recess 41b" of the second body 4".

The stopping device 2 is supported by a support plate 6 which is vertically integral with the manipulating group 10. Also the further stopping device 9 is supported by the support plate 6.

The vertical movement of the second body 4 or 4' is guided by a guiding system comprising a at least one guiding element 71 or 71'. In the second embodiment, the guiding element 71' is configured for guiding both the movement of the second body 4' between the not operative position and the operative position, and the vertical movement of the second body 4'. To this end, the guiding element 71' presents a C-cross section or a cross section having another shape depending on the type of movement which is needed for switching the second body 4' between the operative position and the not operative position.

The safety system 1 or 1' or 1" can comprise an element 8 configured for allowing an operator to generate manually the vertical movement the second body 4 or 4' or 4" with respect the upright 5 and to the first body 3.

The safety system 1 or 1' or 1'' may be configured so that the vertical movement the second body 4 or 4' or 4" with respect the upright 5 and to the first body 3 is generated automatically, based for example on an input from a user or from a sensor. The safety system 1 or 1' or 1" may be configured so that the switching of the second body 4 or 4' or 4" between the operative position and the not operative position is generated automatically, based for example on an input from a user or from a sensor.

## Claims

1. - Safety system (1; 1'; 1") for a vertically movable suspended load corresponding to a manipulation group (10) for manipulating packaging materials, comprising:
- a stopping device (2) configured for being vertically integral with the group (10);
- a first safety body (3) which is configured for being vertically extended while being fixed to a vertical upright (5), the first safety body (3) being provided with a respective plurality of holes (31) which are distributed along the extension of said body (3);
- a second safety body (4; 4'; 4") which is configured for adopting an operative position in which the second body (4; 4'; 4" ) is vertically extended with the first body (3) being interposed between said second body (4; 4'; 4") and said upright (5), the second body (4; 4'; 4") being provided with a respective plurality of recesses (41; 41'; 41") which are distributed along the extension of said second body (4, 4'; 4");
wherein the stopping device (2) can adopt a not engaged condition in which the stopping device (2) does not engage any of said holes and recesses, and an engaged condition in which the stopping device (2), with the second body (4; 4'; 4") adopting the operative position, engages in a vertically slidable manner at least one hole (31a) of the first body (3) and one recess (41a; 41a'; 41a'') of the second body (4; 4'; 4"), to at least limit a downwards vertical accidental movement of the group (10) with respect to the upright (5), the second body (4; 4'; 4") being vertically movable with respect to the first body (3) and the upright (5), in said operative position of the second body (4; 4'; 4"), so that the engaged recess (41a; 41a'; 41a") abuts vertically against the stopping device (2) to prevent a downwards vertical motion of the stopping device (2) with respect to the first body (3).

2. Safety system (1; 1') according to Claim 1, wherein the stopping device (2) comprises an actuator (22) and a stopping pin (21), the actuator (22) comprising a spring (221) and a jack (222);
wherein, in the engaged condition of the stopping device (2), the pin (21) engages in a vertically slidable manner said one hole (31a) of the first body (3);
wherein the jack (222) prevents the pin (21) from engaging said one hole (31a) against the action of the spring (221) so that, by deactivating the jack (222), the spring (221) can push the pin (21) in engagement with said one hole (31a), the operative condition of the safety system (1; 1'; 1") corresponding to the deactivated condition of the jack (222) and to the operative position of the second body (4; 4'; 4").

3. Safety system (1'') according to Claim 2, wherein, in the engaged condition of the stopping device (2), the spring (221) engages in a vertically slidable manner said one recess (41a"), and the second body (4") is vertically movable with respect to the first body (3) and the upright (5), in said operative position of the second body (4"), so that the engaged recess (41a") abuts vertically against the spring (221) to prevent a downwards vertical motion of the stopping device (2) with respect to the first body (3).

4. Safety system (1") according to Claim 3, wherein the second body (4") is rotatable between said operative position in which the spring (221) is faced towards the second body (4") and a not operative position in which the spring (221) is not faced towards the second body (4") so that the spring (221) cannot engage any of the recesses.

5. Safety system (1; 1') according to Claim 2, wherein:
the stopping device (2) comprises at least one stopping pin (21) which can adopt a not engaged position in which the pin (21) does not engage any of said holes and recesses, and an engaged position in which the pin (21), with the second body (4; 4') adopting the operative position, engages in a vertically slidable manner at least said one hole (31a) of the first body (3) and one recess (41a; 41a') of the second body (4; 4'), to at least limit a downwards vertical accidental movement of the group (10) with respect to the upright (5), the second body (4; 4') being vertically movable with respect to the first body (3) and the upright (5), in said operative position of the second body (4; 4'), so that the engaged recess (41a; 41a') abuts vertically against the pin (21) to prevent a downwards vertical motion of the stopping device (2) with respect to the first body (3), the engaged condition of the stopping device (2) corresponding to the engaged position of the pin (21) and the not engaged condition of the stopping device (2) corresponding to the not engaged position of the pin (21).

6. Safety system (1; 1') according to Claim 5, wherein the jack (222) keeps the pin (21) in the not engaged position against the action of the spring (221) so that, by deactivating the jack (222), the spring (221) can push the pin (21) into said engaged position.

7. Safety system (1, 1') according to Claim 5 or 6, wherein:
- the stopping device (2) is configured for operating at a first vertical height in said operative condition of the safety system;
- the system (1; 1') comprises a further stopping device (9) which is configured for operating at a second vertical height in the operative condition of the safety system;
the further stopping device (9) comprises at least one further stopping pin (91) which can adopt a not engaged position in which the further pin (91) does not engage any of said holes and recesses, and an engaged position in which the further pin (91), with the second body (4; 4') adopting the operative position, engages in a vertically slidable manner at least one further hole of the first body (3) and one further recess (41b; 41b') of the second body (4; 4'), to at least limit a downwards vertical accidental movement of the group (10) with respect to the upright (5).

8. Safety system (1; 1') according to Claims 6 and 7, wherein the further stopping device (9) comprises a further actuator (92), the further actuator (92) comprising a further spring (921) and a further jack (922) ;
wherein the further jack (922) keeps the further pin (91) in the not engaged position against the action of the further spring (921) so that, by deactivating the further jack (922), the further spring (921) can push the further pin (91) into said engaged position, the operative condition of the safety system (1; 1') corresponding also to the deactivated condition of the further jack (922).

9. Safety system (1) according to any of Claims from 5 to 8, wherein each recess (41) is defined by a respective hole.

10. Safety system (1) according to Claim 9, wherein each hole defining a recess is elongated along said extension of the second body (4), the second body (4) comprising preferably a respective plate in the form of a strip with the plurality of respective holes (41) passing through the whole thickness of the plate.

11. Safety system (1') according to any of Claims from 5 to 8, wherein the second body (4') is displaceable between said operative position in which the first body (3) is interposed between the second body (4') and the upright (5) and a not operative position in which the first body (3) is not interposed between the second body (4) and the upright (5) so that, in said not operative position of the second body (4'), the pin (21) cannot engage any of the recesses, the second body (4') being vertically movable with respect to the first body (3) and to the upright (5) both in the not operative position and in the operative position.

12. Safety system (1'; 1") according to Claim 4 or 11, wherein the second body (4'; 4") is comb shaped.

13. Safety system (1'; 1") according to Claim 4 or 11 or 12, comprising a guiding element (71') which is configured for guiding both the vertical movement of the second body (4'; 4") with respect to the first body (3) and the upright (5), and the movement of the second body (4'; 4") between the not operative position and the operative position, the guiding element (71') having preferably a C-cross section.

14. Safety system (1; 1'; 1") according to any of the claims from 2 to 12, wherein the stopping device (2) is configured so that, between said not engaged condition and said engaged condition, said pin (21) moves horizontally.

15. Safety system (1; 1'; 1") according to any of the previous Claims, wherein:
each hole of the first body (3) is elongated along said extension of the first body (3), the first body (3) comprising preferably a respective plate in the form of a strip with the plurality of respective holes (31) passing through the whole thickness of the plate;
each recess (41; 41'; 41") of the second body (4; 4'; 4") is elongated along said extension of the second body (4; 4'; 4");
each of said first body (3) and second body (4, 4'; 4") is elongated along the respective extension.

16. Safety system (1; 1'; 1") according to any of the previous Claims, wherein the second body (3) is fixed to the upright (5).

17. Machine for the packaging of pourable products, comprising:
- a manipulating group (10) for manipulating packaging materials;
- an upright (5) to which the group (10) is mounted to be vertically movable with respect to the upright (5), so that the group (10) defines a suspended load;
- a safety system (1; 1'; 1") according to any of the previous Claims.

18. Machine according to Claim 17, wherein:
- the group (10) comprises an operating head (102) and an arm (101) supporting the operating head (102);
- the machine is a palletizing machine, or
- the machine is a depalletizing machine, or
- the machine is a crating machine, or
- the machine is a decrating machine.

## Patentansprüche

1. - Sicherheitssystem (1; 1'; 1") für eine vertikal bewegliche hängende Last, die einer Manipulationsgruppe (10) zum Manipulieren von Verpackungsmaterialien entspricht, umfassend:
- eine Stoppvorrichtung (2), dafür gestaltet, vertikal mit der Gruppe (10) integral zu sein;
- einen ersten Sicherheitskörper (3), dafür gestaltet, vertikal ausgedehnt zu sein, während er an einem vertikalen Ständer (5) befestigt ist, wobei der erste Sicherheitskörper (3) mit einer entsprechenden Vielzahl von Löchern (31) versehen ist, die entlang der Ausdehnung des Körpers (3) verteilt sind;
- einen zweiten Sicherheitskörper (4, 4'; 4"), dafür gestaltet, eine Betriebsposition einzunehmen, bei der der zweite Körper (4, 4'; 4") vertikal ausgedehnt ist, wobei der erste Körper (3) zwischen dem zweiten Körper (4, 4'; 4") und dem Ständer (5) angeordnet ist, wobei der zweite Körper (4, 4'; 4") mit einer entsprechenden Vielzahl von Vertiefungen (41; 41'; 41") versehen ist, die entlang der Ausdehnung des zweiten Körpers (4, 4'; 4") verteilt sind; wobei die Stoppvorrichtung (2) einen Nicht-Eingriffszustand einnehmen kann, bei dem die Stoppvorrichtung (2) mit keinem der Löcher und Vertiefungen in Eingriff steht, und einen Eingriffszustand, bei dem die Stoppvorrichtung (2), wenn der zweite Körper (4; 4'; 4") die Betriebsposition einnimmt, auf eine vertikal verschiebbare Weise in wenigstens ein Loch (31a) des ersten Körpers (3) und eine Vertiefung (41a; 41a'; 41a") des zweiten Körpers (4; 4'; 4") eingreift, um eine unbeabsichtigte vertikale Abwärtsbewegung der Gruppe (10) bezogen auf den Ständer (5) zumindest zu begrenzen, wobei der zweite Körper (4; 4'; 4") in der Betriebsposition des zweiten Körpers (4; 4'; 4") bezogen auf den ersten Körper (3) und den Ständer (5) vertikal beweglich ist, so dass die in Eingriff stehende Vertiefung (41a; 41a'; 41a") vertikal an der Stoppvorrichtung (2) anliegt, um eine vertikale Abwärtsbewegung der Stoppvorrichtung (2) bezogen auf den ersten Körper (3) zu verhindern.

2. Sicherheitssystem (1; 1') nach Anspruch 1, wobei die Stoppvorrichtung (2) einen Aktuator (22) und einen Stoppstift (21) umfasst, wobei der Aktuator (22) eine Feder (221) und eine Buchse (222) umfasst;
wobei in dem Eingriffszustand der Stoppvorrichtung (2) der Stift (21) auf eine vertikal verschiebbare Weise in das eine Loch (31a) des ersten Körpers (3) eingreift;
wobei die Buchse (222) verhindert, dass der Stift (21) gegen die Wirkung der Feder (221) in das eine Loch (31a) eingreift, so dass bei Deaktivieren der Buchse (222) die Feder (221) den Stift (21) in Eingriff mit dem einen Loch (31a) drücken kann, wobei der Betriebszustand des Sicherheitssystems (1; 1'; 1") dem deaktivierten Zustand der Buchse (222) und der Betriebsposition des zweiten Körpers (4; 4'; 4") entspricht.

3. Sicherheitssystem (1") nach Anspruch 2, wobei in dem Eingriffszustand der Stoppvorrichtung (2) die Feder (221) auf eine vertikal verschiebbare Weise in die eine Vertiefung (41a") eingreift und in der Betriebsposition des zweiten Körpers (4") der zweite Körper (4") bezogen auf den ersten Körper (3) und den Ständer (5) vertikal beweglich ist, so dass die in Eingriff stehende Vertiefung (41a") vertikal an der Feder (221) anliegt, um eine vertikale Abwärtsbewegung der Stoppvorrichtung (2) bezogen auf den ersten Körper (3) zu verhindern.

4. Sicherheitssystem (1") nach Anspruch 3, wobei der zweite Körper (4") drehbar ist zwischen der Betriebsposition, in der die Feder (221) dem zweiten Körper (4") zugewandt ist, und einer Nicht-Betriebsposition, in der die Feder (221) dem zweiten Körper (4") nicht zugewandt ist, so dass die Feder (221) in keine der Vertiefungen eingreifen kann.

5. Sicherheitssystem (1; 1') nach Anspruch 2, wobei: die Stoppvorrichtung (2) wenigstens einen Stoppstift (21) umfasst, der eine Nicht-Eingriffsposition einnehmen kann, in der der Stift (21) in keines der Löcher und Vertiefungen eingreift, und eine Eingriffsposition, in der der Stift (21), wenn der zweite Körper (4; 4') die Betriebsposition einnimmt, auf eine vertikal verschiebbare Weise in wenigstens das eine Loch (31a) des ersten Körpers (3) und eine Vertiefung (41a; 41a') des zweiten Körpers (4; 4') eingreift, um eine unbeabsichtigte vertikale Abwärtsbewegung der Gruppe (10) bezogen auf den Ständer (5) zumindest zu begrenzen, wobei der zweite Körper (4; 4') in der Betriebsposition des zweiten Körpers (4; 4') bezogen auf den ersten Körper (3) und den Ständer (5) vertikal beweglich ist, so dass die in Eingriff stehende Vertiefung (41a; 41a') vertikal an dem Stift (21) anliegt, um eine vertikale Abwärtsbewegung der Stoppvorrichtung (2) bezogen auf den ersten Körper (3) zu verhindern, wobei der Eingriffszustand der Stoppvorrichtung (2) der Eingriffsposition des Stifts (21) entspricht und der Nicht-Eingriffszustand der Stoppvorrichtung (2) der Nicht-Eingriffsposition des Stifts (21) entspricht.

6. Sicherheitssystem (1; 1') nach Anspruch 5, wobei die Buchse (222) den Stift (21) gegen die Wirkung der Feder (221) in der Nicht-Eingriffsposition hält, so dass bei Deaktivieren des Buchse (222) die Feder (221) den Stift (21) in die Eingriffsposition drücken kann.

7. Sicherheitssystem (1, 1') nach Anspruch 5 oder 6, wobei:
- die Stoppvorrichtung (2) zum Betrieb bei einer ersten vertikalen Höhe in dem Betriebszustand des Sicherheitssystems gestaltet ist;
- das System (1; 1') eine weitere Stoppvorrichtung (9) umfasst, die zum Betrieb bei einer zweiten vertikalen Höhe in dem Betriebszustand des Sicherheitssystems gestaltet ist;
die weitere Stoppvorrichtung (9) wenigstens einen weiteren Stoppstift (91) umfasst, der eine Nicht-Eingriffsposition einnehmen kann, in der der weitere Stift (91) nicht in eines der Löcher und Vertiefungen eingreift, und eine Eingriffsposition, in der der weitere Stift (91), wenn der zweite Körper (4; 4') die Betriebsposition einnimmt, auf eine vertikal verschiebbare Weise in wenigstens ein weiteres Loch des ersten Körpers (3) und eine weitere Vertiefung (41b; 41b') des zweiten Körpers (4; 4') eingreift, um eine unbeabsichtigte vertikale Abwärtsbewegung der Gruppe (10) bezogen auf den Ständer (5) zumindest zu begrenzen.

8. Sicherheitssystem (1; 1') nach Ansprüchen 6 und 7, wobei die weitere Stoppvorrichtung (9) einen weiteren Aktuator (92) umfasst, wobei der weitere Aktuator (92) eine weitere Feder (921) und eine weitere Buchse (922) umfasst;
wobei die weitere Buchse (922) den weiteren Stift (91) gegen die Wirkung der weiteren Feder (921) in der Nicht-Eingriffsposition hält, so dass bei Deaktivieren der weiteren Buchse (922) die weitere Feder (921) den weiteren Stift (91) in die Eingriffsposition drücken kann, wobei der Betriebszustand des Sicherheitssystems (1; 1') auch dem deaktivierten Zustand der weiteren Buchse (922) entspricht.

9. Sicherheitssystem (1) nach einem der Ansprüche 5 bis 8, wobei jede Vertiefung (41) durch ein entsprechendes Loch definiert ist.

10. Sicherheitssystem (1) nach Anspruch 9, wobei jedes Loch, das eine Vertiefung definiert, entlang der Ausdehnung des zweiten Körpers (4) langgestreckt ist, wobei der zweite Körper (4) vorzugsweise eine entsprechende Platte in der Form eines Streifens umfasst, wobei die Vielzahl von entsprechenden Löchern (41) durch die gesamte Dicke der Platte verläuft.

11. Sicherheitssystem (1') nach einem der Ansprüche 5 bis 8, wobei der zweite Körper (4') zwischen der Betriebsposition, in der der erste Körper (3) zwischen dem zweiten Körper (4') und dem Ständer (5) angeordnet ist, und einer Nicht-Betriebsposition, in der der erste Körper (3) nicht zwischen dem zweiten Körper (4) und dem Ständer (5) angeordnet ist, verschiebbar ist, so dass in der Nicht-Betriebsposition des zweiten Körpers (4') der Stift (21) nicht in eine der Vertiefungen eingreifen kann, wobei der zweite Körper (4') sowohl in der Nicht-Betriebsposition als auch in der Betriebsposition bezogen auf den ersten Körper (3) und dem Ständer (5) vertikal beweglich ist.

12. Sicherheitssystem (1'; 1") nach Anspruch 4 oder 11, wobei der zweite Körper (4'; 4") kammförmig ist.

13. Sicherheitssystem (1'; 1") nach Anspruch 4 oder 11 oder 12, umfassend ein Führungselement (71'), dafür gestaltet, sowohl die vertikale Bewegung des zweiten Körpers (4'; 4") bezogen auf den ersten Körper (3) und den Ständer (5) als auch die Bewegung des zweiten Körpers (4'; 4") zwischen der Nicht-Betriebsposition und der Betriebsposition zu führen, wobei das Führungselement (71') vorzugsweise einen C-Querschnitt aufweist.

14. Sicherheitssystem (1; 1'; 1") nach einem der Ansprüche 2 bis 12, wobei die Stoppvorrichtung (2) so gestaltet ist, dass sich der Stift (21) zwischen dem Nicht-Eingriffszustand und dem Eingriffszustand horizontal bewegt.

15. Sicherheitssystem (1; 1'; 1") nach einem der vorstehenden Ansprüche, wobei:
jedes Loch des ersten Körpers (3) entlang der Ausdehnung des ersten Körpers (3) langgestreckt ist, wobei der erste Körper (3) vorzugsweise eine entsprechende Platte in der Form eines Streifens umfasst, wobei die Vielzahl von entsprechenden Löchern (31) durch die gesamte Dicke der Platte verläuft;
jede Vertiefung (41; 41'; 41") des zweiten Körpers (4; 4'; 4") entlang der Ausdehnung des zweiten Körpers (4; 4'; 4") langgestreckt ist;
jeder von dem ersten Körper (3) und dem zweiten Körper (4, 4'; 4") entlang der entsprechenden Ausdehnung langgestreckt ist.

16. Sicherheitssystem (1; 1'; 1") nach einem der vorstehenden Ansprüche, wobei der zweite Körper (3) an dem Ständer (5) befestigt ist.

17. Maschine zum Verpacken von gießbaren Produkten, umfassend:
- eine Manipulationsgruppe (10) zum Manipulieren von Verpackungsmaterialien;
- einen Ständer (5), an dem die Gruppe (10) bezogen auf den Ständer (5) vertikal beweglich angebracht ist, so dass die Gruppe (10) eine hängende Last definiert;
- ein Sicherheitssystem (1; 1'; 1") nach einem der vorstehenden Ansprüche.

18. Maschine nach Anspruch 17, wobei:
- die Gruppe (10) einen Betätigungskopf (102) und einen Arm (101), der den Betätigungskopf (102) trägt, umfasst;
- die Maschine eine Palettiermaschine ist oder
- die Maschine eine Entpalettiermaschine ist oder
- die Maschine ist eine Verpackungsmaschine ist oder
- die Maschine eine Auspackmaschine ist.

## Revendications

1. Système de sécurité (1 ; 1' ; 1") pour une charge suspendue mobile verticalement correspondant à un groupe de manipulation (10) pour manipuler des matériaux de conditionnement, comprenant :
- un dispositif d'arrêt (2) configuré pour être verticalement monobloc avec le groupe (10) ;
- un premier corps de sécurité (3) qui est configuré pour être verticalement étendu tout en étant fixé à un montant vertical (5), le premier corps de sécurité (3) étant pourvu d'une pluralité respective de trous (31) qui sont distribués le long de l'extension dudit corps (3) ;
- un second corps de sécurité (4 ; 4' ; 4") qui est configuré pour adopter une position opérationnelle dans laquelle le second corps (4 ; 4' ; 4") est verticalement étendu avec le premier corps (3) interposé entre ledit second corps (4 ; 4' ; 4") et ledit montant (5), le second corps (4 ; 4' ; 4") étant pourvu d'une pluralité respective d'évidements (41 ; 41' ; 41") qui sont distribués le long de l'extension dudit second corps (4, 4' ; 4") ;
dans lequel le dispositif d'arrêt (2) peut adopter une condition non en prise dans laquelle le dispositif d'arrêt (2) n'entre en prise avec aucun desdits trous et évidements, et une condition en prise dans laquelle le dispositif d'arrêt (2), avec le second corps (4 ; 4' ; 4") adoptant la position opérationnelle, entre en prise de manière verticalement coulissante avec au moins un trou (31a) du premier corps (3) et un évidement (41a ; 41a' ; 41a") du second corps (4 ; 4' ; 4"), pour au moins limiter un mouvement vertical descendant accidentel du groupe (10) par rapport au montant (5), le second corps (4 ; 4' ; 4") étant verticalement mobile par rapport au premier corps (3) et au montant (5), dans ladite position opérationnelle du second corps (4 ; 4' ; 4"), de telle sorte que l'évidement en prise (41a ; 41a' ; 41a") vient en butée verticalement contre le dispositif d'arrêt (2) pour empêcher un mouvement vertical descendant du dispositif d'arrêt (2) par rapport au premier corps (3).

2. Système de sécurité (1 ; 1') selon la revendication 1, dans lequel le dispositif d'arrêt (2) comprend un actionneur (22) et une goupille d'arrêt (21), l'actionneur (22) comprenant un ressort (221) et un vérin (222) ;
dans lequel, dans la condition en prise du dispositif d'arrêt (2), la goupille (21) entre en prise de manière verticalement coulissante avec ledit un trou (31a) du premier corps (3) ;
dans lequel le vérin (222) empêche la goupille (21) d'entrer en prise avec ledit un trou (31a) contre l'action du ressort (221) de telle sorte que, en désactivant le vérin (222), le ressort (221) peut pousser la goupille (21) en prise avec ledit un trou (31a), la condition opérationnelle du système de sécurité (1 ; 1' ; 1") correspondant à la condition désactivée du vérin (222) et à la position opérationnelle du second corps (4 ; 4' ; 4").

3. Système de sécurité (1'') selon la revendication 2, dans lequel, dans la condition en prise du dispositif d'arrêt (2), le ressort (221) entre en prise de manière verticalement coulissante avec ledit un évidement (41a"), et le second corps (4") est verticalement mobile par rapport au premier corps (3) et au montant (5), dans ladite position opérationnelle du second corps (4"), de telle sorte que l'évidement en prise (41a") vient en butée verticalement contre le ressort (221) pour empêcher un mouvement vertical descendant du dispositif d'arrêt (2) par rapport au premier corps (3).

4. Système de sécurité (1") selon la revendication 3, dans lequel le second corps (4") est rotatif entre ladite position opérationnelle dans laquelle le ressort (221) est tourné vers le second corps (4") et une position non opérationnelle dans laquelle le ressort (221) n'est pas tourné vers le second corps (4") de telle sorte que le ressort (221) ne peut entrer en prise avec aucun des évidements.

5. Système de sécurité (1 ; 1') selon la revendication 2, dans lequel :
le dispositif d'arrêt (2) comprend au moins une goupille d'arrêt (21) qui peut adopter une position non en prise dans laquelle la goupille (21) n'entre en prise avec aucun desdits trous et évidements, et une position en prise dans laquelle la goupille (21), avec le second corps (4 ; 4') adoptant la position opérationnelle, entre en prise de manière verticalement coulissante avec au moins ledit un trou (31a) du premier corps (3) et un évidement (41a ; 41a') du second corps (4 ; 4'), pour au moins limiter un mouvement vertical descendant accidentel du groupe (10) par rapport au montant (5), le second corps (4 ; 4') étant verticalement mobile par rapport au premier corps (3) et au montant (5), dans ladite position opérationnelle du second corps (4 ; 4'), de telle sorte que l'évidement en prise (41a ; 41a') vient en butée verticalement contre la goupille (21) pour empêcher un mouvement vertical descendant du dispositif d'arrêt (2) par rapport au premier corps (3), la condition en prise du dispositif d'arrêt (2) correspondant à la position en prise de la goupille (21) et la condition non en prise du dispositif d'arrêt (2) correspondant à la position non en prise de la goupille (21).

6. Système de sécurité (1 ; 1') selon la revendication 5, dans lequel le vérin (222) maintient la goupille (21) dans la position non en prise contre l'action du ressort (221) de telle sorte que, en désactivant le vérin (222), le ressort (221) peut pousser la goupille (21) jusque dans ladite position en prise.

7. Système de sécurité (1, 1') selon la revendication 5 ou 6, dans lequel :
- le dispositif d'arrêt (2) est configuré pour opérer à une première hauteur verticale dans ladite condition opérationnelle du système de sécurité ;
- le système (1 ; 1') comprend un dispositif d'arrêt supplémentaire (9) qui est configuré pour opérer à une seconde hauteur verticale dans la condition opérationnelle du système de sécurité ;
le dispositif d'arrêt supplémentaire (9) comprend au moins une goupille d'arrêt supplémentaire (91) qui peut adopter une position non en prise dans laquelle la goupille supplémentaire (91) n'entre en prise avec aucun desdits trous et évidements, et une position en prise dans laquelle la goupille supplémentaire (91), avec le second corps (4 ; 4') adoptant la position opérationnelle, entre en prise de manière verticalement coulissante avec au moins un trou supplémentaire du premier corps (3) et un évidement supplémentaire (41b ; 41b') du second corps (4 ; 4'), pour au moins limiter un mouvement vertical descendant accidentel du groupe (10) par rapport au montant (5).

8. Système de sécurité (1 ; 1') selon les revendications 6 et 7, dans lequel le dispositif d'arrêt supplémentaire (9) comprend un actionneur supplémentaire (92), l'actionneur supplémentaire (92) comprenant un ressort supplémentaire (921) et un vérin supplémentaire (922) ;
dans lequel le vérin supplémentaire (922) maintient la goupille supplémentaire (91) dans la position non en prise contre l'action du ressort supplémentaire (921) de telle sorte que, en désactivant le vérin supplémentaire (922), le ressort supplémentaire (921) peut pousser la goupille supplémentaire (91) jusque dans ladite position en prise, la condition opérationnelle du système de sécurité (1 ; 1') correspondant également à la condition désactivée du vérin supplémentaire (922).

9. Système de sécurité (1) selon de quelconques des revendications 5 à 8, dans lequel chaque évidement (41) est défini par un trou respectif.

10. Système de sécurité (1) selon la revendication 9, dans lequel chaque trou définissant un évidement est allongé le long de ladite extension du second corps (4), le second corps (4) comprenant de préférence une plaque respective sous la forme d'une bande avec la pluralité de trous respectifs (41) passant à travers l'épaisseur entière de la plaque.

11. Système de sécurité (1') selon de quelconques des revendications 5 à 8, dans lequel le second corps (4') est déplaçable entre ladite position opérationnelle dans laquelle le premier corps (3) est interposé entre le second corps (4') et le montant (5) et une position non opérationnelle dans laquelle le premier corps (3) n'est pas interposé entre le second corps (4) et le montant (5) de telle sorte que, dans ladite position non opérationnelle du second corps (4'), la goupille (21) ne peut entrer en prise avec aucun des évidements, le second corps (4') étant verticalement mobile par rapport au premier corps (3) et au montant (5) à la fois dans la position non opérationnelle et dans la position opérationnelle.

12. Système de sécurité (1' ; 1") selon la revendication 4 ou 11, dans lequel le second corps (4' ; 4") est en forme de peigne.

13. Système de sécurité (1' ; 1") selon la revendication 4 ou 11 ou 12, comprenant un élément de guidage (71') qui est configuré pour guider à la fois le mouvement vertical du second corps (4' ; 4") par rapport au premier corps (3) et au montant (5), et le mouvement du second corps (4' ; 4") entre la position non opérationnelle et la position opérationnelle, l'élément de guidage (71') ayant de préférence une section transversale en C.

14. Système de sécurité (1 ; 1" ; 1") selon de quelconques des revendications 2 à 12, dans lequel le dispositif d'arrêt (2) est configuré de telle sorte que, entre ladite condition non en prise et ladite condition en prise, ladite goupille (21) se meut horizontalement.

15. Système de sécurité (1 ; 1' ; 1") selon de quelconques des revendications précédentes, dans lequel :
chaque trou du premier corps (3) est allongé le long de ladite extension du premier corps (3), le premier corps (3) comprenant de préférence une plaque respective sous la forme d'une bande avec la pluralité de trous respectifs (31) passant à travers l'épaisseur entière de la plaque ;
chaque évidement (41 ; 41' ; 41") du second corps (4 ; 4' ; 4") est allongé le long de ladite extension du second corps (4 ; 4' ; 4") ;
chacun dudit premier corps (3) et dudit second corps (4, 4' ; 4'') est allongé le long de l'extension respective.

16. Système de sécurité (1 ; 1' ; 1") selon de quelconques des revendications précédentes, dans lequel le second corps (3) est fixé au montant (5).

17. Machine pour le conditionnement de produits versables, comprenant :
- un groupe de manipulation (10) destiné à manipuler des matériaux de conditionnement ;
- un montant (5) sur lequel le groupe (10) est monté pour être verticalement mobile par rapport au montant (5), de telle sorte que le groupe (10) définit une charge suspendue ;
- un système de sécurité (1 ; 1' ; 1") selon de quelconques des revendications précédentes.

18. Machine selon la revendication 17, dans laquelle :
- le groupe (10) comprend une tête opérationnelle (102) et un bras (101) supportant la tête opérationnelle (102) ;
- la machine est une machine de palettisation, ou
- la machine est une machine de dépalettisation, ou
- la machine est une machine de caissage, ou
- la machine est une machine de décaissage.
